# EUROPÄISCHE PATENTSCHRIFT

(11) **EP 0 686 176 B1**
(45) Veröffentlichungstag und Bekanntmachung des Hinweises auf die Patenterteilung: **21.01.1998**
(21) Anmeldenummer: 94907540.2
(22) Anmeldetag: 11.02.1994
(51) Int. Cl.: C09D 167/00, C09D 5/03

(54) **PULVERLACKE AUF BASIS CARBOXYLGRUPPEN ENTHALTENDER POLYESTER UND GEIGNETER VERNETZUNGSMITTEL SOWIE VERFAHREN ZUR BESCHICHTUNG VON METALLBLECHEN**
COATING POWDERS BASED ON CARBOXYL-GROUP-CONTAINING POLYESTERS AND SUITABLE CROSS-LINKING AGENTS, AND A METHOD OF COATING SHEET METAL WITH SUCH COATING POWDERS
VERNIS EN POUDRE A BASE DE POLYESTERS RENFERMANT DES GROUPES CARBOXYLE ET D'AGENTS DE RETICULATION APPROPRIES, ET PROCEDE POUR L'ENDUCTION DE TOLES METALLIQUES

(30) Priorität: 27.02.1993 DE 4306102
(43) Veröffentlichungstag der Anmeldung: 13.12.1995
(73) Patentinhaber: BASF Coatings Aktiengesellschaft, 48165 Münster (DE)
(72) Erfinder: HILGER, Christopher, D-48151 Münster (DE); KRANIG, Wolfgang, D-48308 Senden (DE); WOLTERING, Joachim, D-48159 Münster (DE); CIBURA, Klaus, D-48167 Münster (DE); RADEMACHER, Josef, Beverly Hills, MI 48025 (US); REITER, Udo, D-48291 Telgte (DE)
(86) Internationale Anmeldenummer: EP9400386
(87) Internationale Veröffentlichungsnummer: WO9419417

(56) Entgegenhaltungen:
- EP-A- 0 010 805
- EP-A- 0 322 834
- US-A- 4 618 632

## Beschreibung

Die vorliegende Erfindung betrifft Pulverlacke auf Basis Carboxylgruppen enthaltender Polyester und geeigneter Vernetzungsmittel. Weiterhin betrifft die Erfindung ein Verfahren zur Beschichtung von Metallblechen mit diesen Pulverlacken.

Pulverlacke sind in großer Zahl bekannt. Da sie keine organischen Lösemittel enthalten, kann mit ihnen besonders umweltschonend lackiert werden.

Zur Herstellung der Verkleidungen von Haushaltsgeräten, wie z.B. von Kühlschränken, Tiefkühltruhen, Waschmaschinen, Geschirrspülmaschinen, Trocknern, Mikrowellenherden, Gas- und Elektroherden, können Metallbleche zunächst lackiert und nach dem Lackiervorgang verformt werden. Die für diesen Einsatzzweck geeigneten Beschichtungen müssen eine hohe Verformbarkeit, eine hohe Elastizität sowie eine hohe Oberflächenhärte und natürlich einen guten Korrosionsschutz aufweisen. Es ist bekannt, auch Pulverlacke zur Beschichtung von Metallblechen zu verwenden, die nach der Lackierung zur Herstellung der Verkleidung von Haushaltsgeräten verformt werden.

Pulverlacke auf Basis Carboxylgruppen enthaltender Polyester und Epoxidharz-Vernetzungsmitteln sind in großer Zahl bekannt und beispielsweise beschrieben in EP-A-389926, EP-A-371522, EP-A-326230, EP-B-110450, EP-A-110 451, EP-B-107888, US4,340,698, EP-B-119164, WO 87/02043 und EP-B-10805. Pulverlacke auf Basis saurer Polyester und Epoxidharz-Vernetzungsmitteln zeichnen sich insbesondere durch eine hohe Flexibilität aus. Die Oberflächenhärte der resultierenden Beschichtungen ist jedoch verbesserungsbedürftig.

Pulverlacke auf Basis acrylierter Polyurethan-Bindemittel sind beispielsweise bekannt aus EP-A-410242. Die Polyurethan-Bindemittel werden hergestellt durch Umsetzung einer Polyisocyanat-Komponente mit einer (Meth)Acryloylgruppen aufweisenden Alkoholkomponente und einer Komponente mit gegenüber Isocyanatgruppen reaktionsfähigen Gruppen. Die aus der EP-A-410242 bekannten Polyurethan-Bindemittel härten unter dem Einfluß von Hitze und/oder energiereicher Strahlung aus. Die resultierenden Beschichtungen weisen insbesondere eine hohe Härte und eine gute Lösemittel-und Kratzfestigkeit auf. Die Flexibilität der Pulverlack-Bindemittel ist jedoch stark verbesserungsbedürftig.

Die der vorliegenden Erfindung zugrundeliegende Aufgabe bestand darin, Pulverlacke bereitzustellen, die sich zur Beschichtung von Metallblechen, welche nach dem Lackiervorgang verformt werden sollen, eignen. Die aus den Pulverlacken erhaltenen Beschichtungen sollten gleichzeitig eine hohe Härte sowie eine hohe Verformbarkeit und Flexibilität sowie einen guten Korrosionsschutz und gute dekorative Eigenschaften, wie z.B. Glanz, aufweisen.

Überraschenderweise wird die der Erfindung zugrundeliegende Aufgabe gelöst durch Pulverlacke auf Basis Carboxylgruppen enthaltender Polyester und geeigneter Vernetzungsmittel, wobei die Pulverlacke dadurch gekennzeichnet sind, daß sie als filmbildendes Material eine Mischung aus
A) 70 bis 96 Gew.-%, vorzugsweise 80 bis 93 Gew.-%, einer Mischung aus einem Polyester oder aus mehreren Polyestern (Al) mit einer Säurezahl im Bereich von 10 bis 150 mg KOH/g, bevorzugt im Bereich von 30 bis 100 mg KOH/g, und aus einer Vernetzungsmittelkomponente (A2), welche aus Verbindungen mit im Mittel mehr als einer Epoxidgruppe pro Molekül und/oder aus β-Hydroxyalkylamiden besteht, wobei das Verhältnis der Säuregruppen des Polyesters (Al) bzw. der Polyester (Al) zu den Epoxidgruppen und/oder den B-Hydroxyalkylamidgruppen der Vernetzungsmittelkomponente 0,6:1 bis 1,6:1, bevorzugt 0,9:1 bis 1,1:1, beträgt und
B) 30 bis 4 Gew.-%, vorzugsweise 20 bis 7 Gew.-%, eines acrylierten Polyurethanharzes oder mehrerer acrylierter Polyurethanharze mit einem Gehalt an ethylenisch ungesättigten Doppelbindungen (berechnet als C=C, Molekulargewicht = 24) von 2 bis 10 Gew.-%, bevorzugt von 4 bis 6 Gew.-%,
enthalten, wobei die Summe der Gewichtsanteile von A) und B) 100 Gew.-% beträgt.

Im folgenden werden zunächst die einzelnen Komponenten der erfindungsgemäßen Pulverlacke näher erläutert.

Die als Komponente Al) verwendeten Carboxylgruppen enthaltenen Polyester weisen eine Säurezahl im Bereich von 10 bis 150 mg KOH/g, bevorzugt im Bereich von 30 bis 100 mg KOH/g, auf. Die OH-Zahl der Polyesterharze sollte kleiner oder gleich 30 mg KOH/g betragen. Bevorzugt werden Polyester mit einer Funktionalität ≥ 2 eingesetzt. Die Polyester werden nach den üblichen Methoden (vgl. z.B. Houben Weyl, Methoden der Organischen Chemie, 4. Auflage, Band 14/2, Georg Thieme Verlag, Stuttgart 1961) hergestellt.

Als Carbonsäurekomponente zur Herstellung der Polyester sind aliphatische, cycloaliphatische und aromatische Di- und Polycarbonsäuren geeignet, wie z.B. Phthalsäure, Terephthalsäure, Isophthalsäure, Trimellitsäure, Pyromellitsäure, Adipinsäure, Bernsteinsäure, Glutarsäure, Pimelinsäure, Suberinsäure, Acelainsäure, Sebacinsäure u.ä.. Die Säuren können dabei auch in Form ihrer veresterungsfähigen Derivate (z.B. Anhydride) oder ihrer umesterungsfähigen Derivate (z.B. Dimethylester) eingesetzt werden.

Als Alkoholkomponente zur Herstellung der Polyester sind die üblicherweise eingesetzten Di- und/oder Polyole geeignet, z.B. Ethylenglykol, Propandiol-1,2 und Propandiol-1,3, Butandiole, Diethylenglykol, Triethylenglykol, Tetraethylenglykol, Hexandiol-1,6, Neopentylglykol, 1,4-Dimethylolcyclohexan, Glycerin, Trimethylolethan, Trimethylolpropan, Pentaerythrit, Ditrimethylolpropan, Dipentaerythrit, Diglycerin u.ä..

Die so erhaltenen Polyester können dabei einzeln oder als Mischung verschiedener Polyester eingesetzt werden. Die zur Herstellung der Komponente A1) geeigneten Polyester habem im allgemeinen eine Glasübergangstemperatur oberhalb von 30 °C.

Beispiele für geeignete handelsübliche Polyester sind die unter den folgenden Markennamen im Handel erhältlichen Produkte: Crylcoat 314, 340, 344, 2680, 316, 2625, 320, 342 und 2532 der Firma UCB, Drogenbos, Belgien, Grilesta 7205, 7215, 72-06, 72-08, 72-13, 72-14, 73-72, 73-93 und 7401 der Firma Ems-Chemie, Neocrest P670, P671, P672, P678 und P662 der Firma ICI sowie Uralac P2400, Uralac P3400 und Uralac P5000 der Firma DSM.

Als Polyesterkomponente Al) kommen auch ungesättigte, COOH-Gruppen enthaltende Polyesterharze in Frage. Diese werden erhalten durch Polykondensation beispielsweise von Maleinsäure, Fumarsäure oder anderen aliphatischen oder cycloaliphatischen Dicarbonsäuren mit einer ethylenisch ungesättigten Doppelbindung, ggf. zusammen mit gesättigten Polycarbonsäuren, als Polycarbonsäure-komponente.

Als Vernetzungsmittelkomponente A2) kommen Verbindungen mit im Mittel mehr als einer gegenüber den Carboxylgruppen der Komponente (A) reaktionsfähigen Epoxid-Gruppen pro Molekül in Frage. Dabei handelt es sich um feste Epoxidharze mit Epoxidäquivalent-Gewichten im allgemeinen zwischen 400 und 3.000. Besonders bevorzugt werden Epoxidharze auf Basis von Bisphenol A und/oder epoxidierte Novolakharze eingesetzt. Die Epoxidharze auf Basis von Bisphenol A weisen dabei im allgemeinen eine Funktionalität ≤ 2, die epoxidierten Novolakharze eine Funktionalität ≥ 2 auf.

Als Epoxidharzvernetzungsmittel (A2) kommen auch Epoxidgruppen enthaltende Polyacrylatharze in Frage, welche hergestellt werden durch Copolymerisation ethylenisch ungesättigter Monomerer, welche zum Teil Epoxidgruppen aufweisen, wie z.B. Glycidylacrylat und Glycidylmethacrylat.

Geeignete Epoxidharze sind beispielsweise die unter folgenden Namen im Handel erhältlichen Produkte: Epikote 154, 1001, 1002, 1055, 1004, 1007, 1009, 3003-4F-10 der Firma Shell-Chemie, XZ 86795 und DER 664, 667, 669, 662, 642U und 672U der Firma Dow sowie Araldit XB 4393, XB 4412, GT 7072, GT 7203, GT 7004, GT 7304, GT 7097 und GT 7220 der Firma Ciba-Geigy.

Ganz besonders bevorzugt wird als Komponente A2) Triglycidylisocyanurat (TGIC) verwendet. TGIC ist im Handel beispielsweise unter der Bezeichnung Araldit PT 810 (Firma Ciba-Geigy) erhältlich.

Bei der Verwendung von Epoxidgruppen enthaltenen Vernetzungsmitteln A2) werden in den erfindungsgemäßen Pulverlacken Härtungskatalysatoren, üblicherweise in einer Menge von 0,01 bis 5,0 Gew.-% jeweils bezogen auf das Gesamtgewicht des Pulverlacks, verwendet. Vorteilhafterweise werden als Katalysatoren Imidazol, 2-Methylimidazol, Ethyltriphenylphosphoniumchlorid oder ein anderes Salz desselben, ein Chinolinderivat, wie beispielsweise in der EP-B-10805 beschrieben, ein primäres, sekundäres oder tertiäres Aminophenol, Aluminium-acetylacetonat oder ein Toluolsulfonsäuresalz oder eine Mischung aus verschiedenen der genannten Katalysatoren verwendet. Üblicherweise enthalten die im Handel erhältlichen Carboxylgruppen enthaltenden Polyesterharze bereits den erforderlichen Härtungskatalysator.

Als Vernetzungsmittel A2) kommen auch die aus der EP-A-322 834 bekannten β-Hydroxyalkylamide in Frage.

Außerdem ist es auch möglich, eine Mischung aus Epoxidgruppen und β-Hydroxyalkylamidgruppen enthaltenden Vernetzungsmitteln als Komponente (A2) zu verwenden.

Die β-Hydroxyalkylamide können hergestellt werden durch Umsetzung von niederen Alkylestern oder Mischungen von Estern von Carbonsäuren mit β-Hydroxyalkylaminen bei einer Temperatur von Raumtemperatur bis etwas 200 °C in Gegenwart oder Abwesenheit von Katalysatoren. Geeignete Katalysatoren sind basische Katalysatoren, wie Natriummethoxid, Kaliummethoxid, Natriumbutoxid, Calium-buthoxid, Natriumhydroxid, Kaliumhydroxid, in Anteilen von etwa 0,1 bis 1 Gew.-%, bezogen auf das Gewicht des Alkylesters. Die Hydroxylfunktionalität der β-Hydroxyalkylamide sollte durchschnittlich mindestens 2, bevorzugt größer als 2 und besonders bevorzugt größer 2 bis 4 betragen. Bezüglich weiterer Einzelheiten zur Herstellung der β-Hydroxyalkylamide wird auf entsprechende Ausführungen in der EP-A-322834 verwiesen.

Als Komponente B) der erfindungsgemäßen Pulverlacke werden 30 bis 4 Gew.-%, vorzugsweise 20 bis 7 Gew.-%, bezogen auf die Summe der Gewichtsanteile der Komponenten A) und B), eines acrylierten Polyurethanharzes oder mehrerer acrylierter Polyurethanharze verwendet. Geeignete acrylierte Polyurethanharze sind beispielsweise beschrieben in EP-A-410 242. Die dort beschriebenen Polyurethane schmelzen innerhalb des Temperaturbereichs von 50 bis 180 °C und weisen ein Gehalt an olefinischen Doppelbindungen in Form von (Meth)Acryloylgruppen (berechnet als C = C, Molekulargewicht = 24) von 3 bis 10 Gew.-% auf. Die in der EP-A-410 242 beschriebenen acrylierten Polyurethanharze werden hergestellt durch Umsetzung einer Polyisocyanatkomponente mit einer (Meth)Acryloylgruppen aufweisenden Alkoholkomponente sowie mit einer (Meth)Acryloylgruppen-freien Aufbaukomponente mit gegenüber Isocyanatgruppen reaktionsfähigen Gruppen, wie z. B. Polyolen. Die Herstellung der acrylierten Polyurethane ist jedoch auch ohne Polyolkomponente möglich.

Besonders bevorzugt werden als Komponente B) acrylierte Polyurethanharze verwendet, welche eine Glasübergangstemperatur t_{g} oberhalb von 30 °C aufweisen und erhältlich sind durch Umsetzung von Polyisocyanaten, eine Hydroxylgruppe aufweisenden Acrylaten und/oder Methacrylaten und Alkoholen mit mindestens 2 Hydroxylgruppen pro Molekül.

Geeignete Polyisocyanate sind beliebige, aus der Polyurethanchemie an sich bekannte, organische Polyisocyanate mit aliphatisch, cycloaliphatisch und/oder aromatisch gebundenen Isocyanaten, die vorzugsweise ein Molekulargewicht von 168 bis 1.000 aufweisen. Geeignet sind beispielsweise 1-Isocyanato-3,3,5-trimethyl-5-isocyanatomethylcyclohexan (Isophorondiisocyanat), 4,4'-Diisocyanatodicyclohexylmethan, 4,4'-Diisocyanatodiphenylmethan, dessen technische Gemische mit 2,4'-Diisocyanatodiphenylmethan und ggf. den höheren Homologen dieser Diisocyanate, 2,4-Diisocyanatotoluol und dessen technische Gemische mit 2,6-Diisocyanatotoluol, 1,3- Bis (2-isocyanatoprop-2-yl) benzol (Handelsname TMXDI). Geeignet sind ebenfalls Biuret-, Isocyanurat- oder Urethan-modifizierte Polyisocyanate auf Basis dieser einfachen Polyisocyanate. Die Herstellung derartiger Derivate ist beispielsweise beschrieben in US-PS 3, 124, 605, US-PS 3, 183, 112, US-PS 3, 919, 218 und US-PS 4, 324, 879.

Die (Meth)Acryloylgruppen aufweisenden einwertigen Alkohole sind insbesondere Hydroxyalkylester der Acrylsäure oder Methacrylsäure mit vorzugsweise 2 bis 4 Kohlenstoffatomen im Hydroxyalkylrest, wie Hydroxyethyl(meth)acrylat, 2- und 3-Hydroxypropyl(meth)acrylat, 2-Hydroxybutyl(meth)acrylat, 3-Hydroxybutyl(meth)-acrylat und 4-Hydroxybutyl(meth)acrylat zu verstehen.

Die (Meth)Acryloylgruppen-freie organische Verbindung mit mindestens 2 gegenüber Isocyanatgruppen reaktionsfähigen Gruppen enthält vorzugsweise 2 bis 4 alkoholische Hydroxylgruppen. Beispielhaft seien Ethylenglykol, 1,2-Propandiol, 1,3-Propandiol, Neopentylglykol, Glycerin, Trimethylolpropan, Pentaerythrit und Cyclohexandimethanol-1,4 genannt. Weiterhin sind höhermolekulare Verbindungen mit gegenüber Isocyanatgruppen reaktionsfähigen Gruppen geeignet, wie beispielsweise bekannte Polyhydroxypolyether oder Polyhydroxypolyester.

Die Herstellung der acrylierten Polyurethanharze erfolgt durch Umsetzung der genannten Ausgangskomponenten entweder ohne Lösemittel oder in inerten Lösungsmitteln, wie beispielsweise Aceton, Ethylacetat, Butylacetat oder Toluol, wobei vorzugsweise Reaktionstemperaturen von 20 bis 100 °C eingehalten werden sollen. Vorzugsweise wird die Reaktion so geführt, daß zunächst in einem ersten Reaktionsschritt die Umsetzung zwischen der Polyisocyanatkomponente und der (Meth)Acryloylgruppen aufweisenden Alkoholkomponente durchgeführt wird, worauf sich die Umsetzung des so erhaltenen Umsetzungsproduktes mit der Polyolkomponente anschließt. Die Additionsreaktion kann in an sich bekannter Weise mittels geeigneter Katalysatoren, wie beispielweise Zinnoctoat, Dibutylzinndilaurat oder tertiären Aminen beschleunigt werden.
Das als Umsetzungsprodukt anfallende Polyurethanacrylat kann andererseits durch Zugabe geeigneter Inhibitoren und Antioxidantien, wie beispielsweise Phenole und/oder Hydrochinone, vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen. Bei Verwendung von Lösemitteln bei der Synthese der Polyurethanacrylate wird nach beendeter Umsetzung das verwendete Lösungsmittel wieder entfernt. Die Polyurethan-acrylate sollten nicht mehr als 1 bis 2 % Prozent Restlösungsmittel enthalten.

Besonders bevorzugt sind erfindungsgemäße Pulverlacke, bei denen die Mischung aus den Komponenten (A) und (B) 3,5 g bis 10 g ethylenisch ungesättigte Doppelbindungen (berechnet als C=C, Molekulargewicht = 24) pro 1000 g der Mischung aus den Komponenten (A) und (B) enthält.

Die erfindungsgemäßen Pulverlacke können thermisch oder zusätzlich photochemisch, z. B. mittels UV- oder Elektronenstrahlung, ausgehärtet werden. Die Pulverlacke enthalten ggf. radikalbildende Initiatoren, welche bei erhöhten Temperaturen oder bei Einwirkung energiereicher Strahlung in freie Radikale zerfallen. Beispiele für einsetzbare radikalbildende Initiatoren sind Azo-Verbindungen, wie z.B. Azoisobuttersäurenitril, Peroxide, wie z.B. Dibenzoylperoxid, Dilauroylperoxid und Di-tert.-Butylperoxid und Hydroperoxide, wie z.B. Cumolhydroperoxid. Es werden vorzugsweise Initiatoren eingesetzt, die einen Schmelzpunkt aufweisen, der über 30 °C liegt, und die bei 120 °C eine Halbwertszeit von mindestens 5 min aufweisen.
Die radikalbildenden Initiatoren werden in einem Anteil von 0,1 bis 3 Gew.-%, bezogen auf das Gesamtgewicht der Pulverlacke, eingesetzt.

Im Falle der Vernetzung mittels UV-Bestrahlung ist es notwendig, daß den Pulverlacken vor der Homogenisierung Photoinitiatoren zugesetzt werden. Als Photoinitiatoren sind die üblicherweise eingesetzten pulverisierbaren Verbindungen geeignet. Beispiele hierfür sind 1-Hydroxycyclohexylphenylketon, Benzildimethylketal oder 2-Methyl-1-(4-methylthio)phenyl-2-morpholino-propanon-1 oder Trimethylbenzoyldiphenylphosphinoxid. Die Photoinitiatoren werden in einer Menge von etwa 0,1 bis 10 Gew.-%, bezogen auf das Gesamtgewicht der Pulverlacke, eingesetzt.

Die erfindungsgemäßen Pulverlacke enthalten ggf. Pigmente, wie z.B. Titandioxid, sowie übliche Hilfsstoffe und Additive, beispielsweise Verlaufsmittel, wie z.B. Polybutylacrylat oder Silikone, sowie Entlüftungsmittel.

Die Pulverlacke werden z.B. in Extrudern oder Knetern bei Temperaturen von 80 bis 140 °C homogenisiert, wobei der hierbei anfallende Feststoff dann in an sich bekannter Weise gemahlen und durch Sieben von groben Kornanteilen befreit wird. Die so hergestellten Pulverlacke können nach üblichen Pulverauftragsverfahren, wie z.B. dem elektrostatischen Pulversprühen oder Wirbelsintern, auf die zu beschichtenden Metallbleche aufgebracht werden.

Die Härtung der überzüge kann entweder durch Erhitzen auf Temperaturen von 130 °C bis etwa 220 °C, vorzugsweise auf Temperaturen von 150 °C bis 190 °C, oder zusätzlich durch die Einwirkung von energiereicher Strahlung, wie Elektronenstrahlung oder UV-Strahlung, erfolgen.

Die Metallbleche, auf die die erfindungsgemäßen Pulverlacke appliziert werden, haben im allgemeinen eine Schichtstärke von 0,2 bis 3 mm. Vor der Applikation der Pulverlacke werden die Metallbleche gereinigt bzw. entfettet und vorgeheizt. Die mit den erfindungsgemäßen Pulverlacken beschichteten Bleche werden nach der Lakkierung einer Verformung unterzogen, die auf sogenannten "Pre-Coated-Metal-Anlagen" erfolgt.

Die vorliegende Erfindung betrifft ebenfalls ein Verfahren zur Herstellung beschichteter Metallbleche, das dadurch gekennzeichnet ist, daß zur Beschichtung der Metallbleche die zuvor beschriebenen Pulverlacke verwendet werden, welche thermisch oder zusätzlich durch energiereiche Strahlung, wie z. B. UV- oder Elektronenstrahlung, ausgehärtet werden. Die Erfindung betrifft insbesondere ein Verfahren zur Herstellung beschichteter Metallbleche mit den zuvor beschriebenen Pulverlacken, bei dem die Metallbleche nach der Pulverlack-applikation und Pulverlackhärtung verformt werden.

Die aus den erfindungsgemäßen Pulverlacken erhaltenen Überzüge weisen hervorragende technologische Eigenschaften auf. Sie haben einen sehr guten Korrosionsschutz sowie gute dekorative Eigenschaften, wie z.B. einen guten Glanz. Die resultierenden Überzüge haben eine hohe Härte sowie gleichzeitig eine hohe Verformbarkeit und Flexibilität. Durch die Kombination zweier unterschiedlicher Vernetzungsmechanismen bleibt die hohe Flexibilität der Polyester-Epoxidharzsysteme erhalten, wobei gleichzeitig die Oberflächenhärte erhöht wird.

Nachfolgend wird die Erfindung anhand von Ausführungsbeispielen näher erläutert. Dabei bedeuten Teile Gewichts-Teile, sofern nichts anderes angegeben wird.

### I. Herstellung von acrylierten Polyurethanharzen

I.1.: In einem Kessel mit Rührer, Rückflußkühler, Inertgaseinleitung und Troptrichter werden 1189,6 Teile 4,4'-Diisocyanatocyclohexylmethan (Desmodur-W) vorgelegt. Dazu wird bei 30 °C unter Rühren eine Mischung aus 526,7 Teilen 2-Hydroxyethylacrylat, 120,3 Teilen Diethylenglykol und 163,5 Teilen Cyclohexandimethanol-1,4 gegeben. Anschließend werden 0,4 g Dibutylzinndilaurat zugegeben. Die einsetzende exotherme Reaktion erreicht eine maximale Temperatur von 147 °C. Nach dem Abkühlen beträgt der NCO-Gehalt weniger als 0,3 %. Das Harz wird im geschmolzenen Zustand abgelassen. Der Gehalt an Doppelbindungen (berechnet als C=C, Molekulargewicht = 24) beträgt 5,4 Gew.-%.
I.2.: In einem Kessel mit Rührer, Rückflußkühler, Inertgaseinleitung und Tropftrichter werden 1164,4 Teile Desmodur-W vorgelegt. Dazu wird bei 30 °C unter Rühren eine Mischung aus 515,6 Teilen 2-Hydroxyethylacrylat und 320 Teilen Cyclohexandimethanol-1,4 gegeben. Anschließend werden 0,2 g Dibutylzinndilaurat zugegeben. Die einsetzende exotherme Reaktion erreicht eine maximale Temperatur von 137°C. Nach dem Abkühlen beträgt der NCO-Gehalt weniger als 0,3 %. Das Harz wird im geschmolzenen Zustand abgelassen. Der Gehalt an Doppelbindungen (berechnet als C=C, Molekulargewicht = 24) beträgt 5,3 Gew.-%.
I.3.: In einem Edelstahlkessel mit Rührer, Rückflußkühler, Inertgaseinleitung und Tropfrichter werden 958,9 Teile Toluylendiisocyanat vorgelegt und auf 40 °C erwärmt.
   Innerhalb von 2 Stunden werden 639,9 Teile 2-Hydroxyethylacrylat zugetropft. Dabei erwärmt sich die Reaktionsmischung auf ca. 60 °C. Anschließend werden 401,2 Teile Cyclohexandimethanol 1,4 zur Reaktionsmischung gegeben und auf etwa 100 °C aufgeheizt. Nachdem der NCO-Gehalt unter 0,5 % gesunken ist, wird das heiße Produkt abgelassen. Der Gehalt an Doppelbindungen (berechnet als C=C, Molekulargewicht = 24) beträgt 6,6 Gew.-%.
I.4.: In einem Edelstahlkessel mit Rührer, Rückflußkühler, Inertgaseinleitung und Tropfrichter werden 1152,4 Teile Desmodur-W mit 120 mg (5 Tropfen DBTL) und 10 Teilen Hydrochinon vorgelegt. Unter Rühren werden 571,8 Teile 2-Hydroxyethylmethacrylat innerhalb von 160 Minuten zugetropft. Die Raktionsmischung erwärmt sich dabei auf 55 °C. AnschlieBend werden 221,7 Teile Cyclohexandimethanol 1,4 zur Reaktionsmischung gegeben und auf 100 °C aufgeheizt. Nachdem der NCO-Gehalt unter 0,5 % gesunken ist, wird das heiße Produkt abgelassen. Der Gehalt an Doppelbindungen (berechnet als C=C, Molekulargewicht = 24) beträgt 5,27 Gew.-%.
I.5.: In einem Edelstahlkessel mit Rührer, Rückflußkühler, Inertgaseinleitung und Tropftrichter werden 1800 Teile TMXDI (Cythane 3160 American Cyanamid) vorgelegt. Unter Rühren werden 548,7 Teile 2-Hydroxyethylmethacrylat innerhalb von 4 Stunden zugetropft. Die Reaktionsmischung wird auf 90 °C erwärmt. Nach einer weiteren Stunde wird das Lösungsmittel unter Vakuum abdestilliert. Das Harz hat einen Festkörper von 99 %. Der Gehalt an Doppelbindungen (berechnet als C=C, Molekulargewicht = 24) beträgt 5,06 Gew.-%.

### II: Herstellung einer pulverförmigen Zusammensetzung auf Basis eines Carboxylgruppen enthaltenden Polyesters und Triglycidylisocyanurat

Aus 558 Gewichtsteilen eines COOH-Gruppen aufweisenden Polyesters (Handelsbezeichnung Uralac P 5000, Hersteller DSM) und 42 Gewichtsteilen Triglycidylisocyanurat (Handelsbezeichnung Araldit PT 810; Hersteller Ciba-Geigy) wird durch Extrudieren und Mahlen eine pulverförmige Zusammensetzung hergestellt.

### III. Herstellung von Pulverlacken

Die Bestandteile werden jeweils in einem Fluid-Mischer (Fa Thyssen-Henschel, Typ FM 10C) eine Minute lang gemischt. Anschließend wird die Mischung in einem Buss-Co-Kneter (Typ PLK 46) extrudiert (Gehäusetemperatur in der Mitte des Extrusionsraumes ca. 110 °C, Umdrehungszahl der Extruderschnecke 50/min). Das abgekühlte Extrudat wird dann in einer Sichtermühle (Fa. Hosakawa MikroPul, Typ ACM 2L) zu einem Pulver mit einem, mittleren Teilchendurchmesser von 30 - 40 µm vermahlen und durch ein Sieb mit einer Porengröße von 125 µm gesiebt.

### IV. Applikation und Härtung der Pulverlacke

Die Pulverlacke werden elektrostatisch auf entfettete Stahlbleche (Dicke 0,5 mm) appliziert und 15 Minuten bei 205 °C in einem Umluftofen eingebrannt.
Der Pulverlack 3 wird nach dem Einbrennen noch durch Elektronenstahlung nachgehärtet (Beschleunigungsspannung 150 kV, Strahlungsstrom 5 mA, Strahlungsleistung 4,5 MRad, Durchlaufgeschwindigkeit 20 m/Min unter Inertgasatmosphäre). Die Filmschichtdicke beträgt 40 - 70 µm.

### Vergleichsbeispiel 1

Die unter II. hergestellte Mischung aus dem Carboxylgruppen enthaltenden Polyester und TGIC wird zusammen mit 4,5 Gewichtsteilen Benzoin, 9 Gewichtsteilen Modaflow III (Firma Monsanto) und 204,5 Gewichtsteilen Kronos 2160 (Firma Kronos Titan) eingewogen und wie unter III. beschrieben zum Pulverlack 1 verarbeitet.

### Vergleichsbeispiel 2

1260 Teile einer dem Vergleichsbeispiel 1 entsprechenden Mischung und 140 Teile eines nach I.2 gefertigten acrylierten Polyurethanharzes werden eingewogen und wie unter III. beschrieben zum Pulverlack 2 verarbeitet. Der Pulverlack 2 enthält keine radikalbildenden Initiatoren.

### Beispiel 1

1260 Gewichtsteile einer dem Vergleichsbeispiel 1 entsprechenden Mischung und 140 Gewichtsteilen eines nach I.2 gefertigten Harzes werden eingewogen und wie unter III. beschrieben zum Pulverlack 3 verarbeitet.

### Beispiel 2

1260 Gewichtsteile einer dem Vergleichsbeispiel 1 entsprechenden Mischung und 140 Gewichtsteile eines nach I.2 gefertigten Harzes und 1,4 Perkadox BC (Dicumylperoxid, Fa. AKZO) werden eingewogen und wie unter III. beschrieben zum Pulverlack 4 verarbeitet.

### Beispiel 3

1260 Gewichtsteile einer dem Vergleichsbeispiel 1 entsprechenden Mischung und 140 Gewichtsteile eines nach I.1 gefertigten harzes und 1,4 Perkadox BC (Dicumylperoxid, Fa. AKZO) werden eingewogen und wie unter III. beschrieben zum Pulverlack 5 verarbeitet.

Die in dem Vergleichsbeispielen 1 und 2 und in den Beispielen 1 bis 3 hergestellten Pulverlacke werden wie unter IV. beschrieben auf Metallbleche appliziert und gehärtet. Die resultierenden Überzüge weisen einen guten Verlauf und einen guten Glanz auf. Die Überzüge ergeben gute Korrosionsschutzeigenschaften (Salzsprühtest nach DIN 50021-SS nach 1000 h auf Bonder 1041 in Ordnung).

Die Eigenschaften bezüglich der Flexibilität (T-Bend-Test) und der Härte sind nachfolgend aufgeführt.

| | T-Bend¹⁾ | Bleistifthäfte 2) |
|---|---|---|
| Vergleichsbeispiel 1 | 1 | F |
| Vergleichsbeispiel 2 | 1 | F |
| Beispiel 1 | 1 | 2 H |
| Beispiel 2 | 0,5 | 2 H |
| Beispiel 3 | 1 | 2 H |

| | | |
|---|---|---|
| ¹⁾ T-Bend Test: Beim T-Bend Test wird die beschichtete Blechtafel geknickt. Das Ergebnis "T-Bend = 0" bedeutet, daß das Blech ohne Rißbildung in der Filmschicht an der Knickkante um 180° gebogen werden kann. Entsprechend bedeuten die anderen Zahlen diejenige Anzahl an Blechen der gleichen Dicke wie die des unbeschichteten Blechs, die zwischen die geknickten Teile des beschichteten Bleches paßt, ohne daß die Beschichtung an der Knickkante Risse aufweist. | | |
| ²⁾ Bleistifthärte-Test Bei diesem Test wird die Härte des härtesten Bleistifts angegeben, der keine Kratzspur auf der pulverlackierten Fläche hinterläßt. Die Härte der Stifte steigt in der nachfolgend angegebenen Reihe: 5B, 4B, 3B, 2B, B, HB, F, H, 2H, 3H, 4H, 5H, 6H. | | |

## Patentansprüche

1. Pulverlacke auf Basis Carboxylgruppen enthaltender Polyester und geeigneter Vernetzungsmittel, dadurch gekennzeichnet, daß die Pulverlacke als filmbildendes Material eine Mischung aus
A) 70 bis 96 Gew.-%, vorzugsweise 80 bis 93 Gew.-%, einer Mischung aus einem Polyester oder aus mehreren Polyestern (Al) mit einer Säurezahl im Bereich von 10 bis 150 mg KOH/g, bevorzugt im Bereich von 30 bis 100 mg KOH/g, und aus einer Vernetzungsmittelkomponente (A2), welche aus Verbindungen mit im Mittel mehr als einer Epoxidgruppe pro Molekül und/oder aus β-Hydroxyalkylamiden besteht, wobei das Verhältnis der Säuregruppen des Polyesters bzw. der Polyester zu den Epoxidgruppen und/oder den β-Hydroxyalkylamidgruppen der Vernetzungsmittelkomponente 0,6:1 bis 1,6:1, bevorzugt 0,9:1 bis 1,1:1, beträgt, und
B) 30 bis 4 Gew.-%, vorzugsweise 20 bis 7 Gew.-%, eines acrylierten Polyurethanharzes oder mehrerer acrylierter Polyurethanharze mit einem Gehalt an ethylenisch ungesättigten Doppelbindungen (berechnet als C=C, Molekulargewicht = 24) von 2 bis 10 Gew.-%, bevorzugt von 4 bis 6 Gew-%,
enthalten, wobei die Summe der Gewichtsanteile von A) und B) 100 Gew.-% beträgt.

2. Pulverlacke nach Anspruch 1, dadurch gekennzeichnet, daß als Vernetzungsmittelkomponente A2) Triglycidylisocyanurat verwendet wird.

3. Pulverlacke nach Anspruch 1 oder 2, dadurch gekennzeichnet, daß das als Komponente B) verwendete acrylierte Polyurethan eine Glasübergangstemperatur (tg) oberhalb von 30 °C aufweist und erhältlich ist durch Umsetzung von Polyisocyanaten, eine Hydroxylgruppe aufweisenden Acrylaten oder Methacrylaten und Alkoholen mit mindestens 2 Hydroxylgruppen pro Molekül.

4. Pulverlacke nach Anspruch 1 bis 3, dadurch gekennzeichnet, daß die Mischung aus A) und B) 3,5 g bis 10 g ethylenisch ungesättigte Doppelbindungen (berechnet als C=C, Molekulargewicht = 24) pro 1000 g Mischung enthält.

5. Pulverlacke nach Anspruch 1 bis 4, dadurch gekennzeichnet, daß sie außer den filmbildenden Komponenten A) und B) radikalbildende Initiatioren und/oder Photoinitiatoren sowie ggf. Pigmente sowie übliche Hilfsstoffe und Additive enthalten.

6. Verfahren zur Herstellung beschichteter Metallbleche, dadurch gekennzeichnet, daß zur Beschichtung die Pulverlacke nach Anspruch 1 bis 5 verwendet werden, welche thermisch oder zusätzlich durch energiereiche Strahlung ausgehärtet werden.

7. Verfahren nach Anspruch 6, dadurch gekennzeichnet, daß die Metallbleche nach der Pulverlackbeschichtung und Pulverlackhärtung verformt werden.

## Claims

1. Powder coatings based on carboxyl-containing polyesters and appropriate crosslinking agents, characterized in that the powder coatings comprise as film-forming material a mixture of
A) from 70 to 96% by weight, preferably from 80 to 93% by weight, of a mixture of one polyester or of two or more polyesters (Al) having an acid number in the range from 10 to 150 mg of KOH/g, preferably in the range from 30 to 100 mg of KOH/g, and of a crosslinking component (A2) which consists of compounds having on average more than one epoxide group per molecule and/or of β-hydroxyalkylamides, the ratio of the acid groups of the polyester (Al) or of the polyesters (Al) to the epoxide groups and/or the β-hydroxyalkylamide groups of the crosslinking component being from 0.6:1 to 1.6:1, preferably from 0.9:1 to 1.1:1, and
B) from 30 to 4% by weight, preferably from 20 to 7% by weight, of one acrylicized polyurethane resin or two or more acrylicized polyurethane resins having a content of ethylenically unsaturated double bonds (calculated as C=C, molecular weight = 24) of from 2 to 10% by weight, preferably from 4 to 6% by weight,
the sum of the proportions by weight of A) and B) being 100% by weight.

2. Powder coatings according to Claim 1, characterized in that triglycidyl isocyanurate is used as crosslinking component A2).

3. Powder coatings according to Claim 1 or 2, characterized in that the acrylicized polyurethane used as component B) has a glass transition temperature (tg) of more than 30°C and is obtainable by reacting polyisocyanates, methacrylates or acrylates having one hydroxyl group and alcohols having at least 2 hydroxyl groups per molecule.

4. Powder coatings according to Claim 1 to 3, characterized in that the mixture of A) and B) contains from 3.5 g to 10 g of ethylenically unsaturated double bonds (calculated as C=C, molecular weight = 24) per 1000 g of mixture.

5. Powder coatings according to Claim 1 to 4, characterized in that in addition to the film-forming components A) and B) they comprise free-radical initiators and/or photoinitiators and also, if desired, pigments and customary auxiliaries and additives.

6. Process for producing coated metal sheets, characterized in that the powder coatings according to Claim 1 to 5 are used for coating and are cured thermally or in addition by means of high-energy radiation.

7. Process according to Claim 6, characterized in that the metal sheets are deformed following the application and curing of the powder coating.

## Revendications

1. Enduits en poudre à base de polyesters contenant des groupes carboxyle et d'agents de réticulation appropriés, caractérisés en ce que les enduits en poudre contiennent, en tant que matériau filmogène, un mélange de
A) 70 à 96% en poids, de préférence 80 à 93% en poids, d'un mélange d'un polyester ou de plusieurs polyesters (Al) ayant un indice d'acide dans la gamme de 10 à 150 mg KOH/g, de préférence dans la gamme de 30 à 100 mg KOH/g, et d'un composant agent de réticulation (A2), qui comprend des composés ayant en moyenne plus d'un groupe époxyde par molécule et/ou des β-hydroxyalkylamides, le rapport entre les groupes acides du polyester ou des polyesters et les groupes époxyde et/ou les groupes β-hydroxyalkylamide du composant agent de réticulation étant de 0,6:1 à 1,6:1, de préférence de 0,9:1 à 1,1:1, et
B) 30 à 4% en poids, de préférence 20 à 7% en poids, d'une résine de polyuréthane acrylée ou de plusieurs résines de polyuréthane acrylées ayant une teneur en doubles liaisons éthyléniquement insaturées (calculée en tant que C=C, poids moléculaire = 24) de 2 à 10% en poids, de préférence de 4 à 6% en poids,
la somme des proportions pondérales de A) et B) étant de 100%.

2. Enduits en poudre selon la revendication 1, caractérisés en ce que l'on utilise l'isocyanurate de triglycidyle en tant que composant agent de réticulation A2).

3. Enduits en poudre selon la revendication 1 ou 2, caractérisés en ce que le polyuréthane acrylé utilisé en tant que composant B) présente une température de transition vitreuse (Tᵥ) supérieure à 30°C et peut être obtenu par réaction de polyisocyanates, d'acrylates ou de méthacrylates présentant un groupe hydroxyle et d'alcools ayant au moins deux groupes hydroxyle par molécule.

4. Enduits en poudre selon les revendications 1 à 3, caractérisés en ce que le mélange de A) et B) contient de 3,5 g à 10 g de doubles liaisons éthyléniquement insaturées (calculé en tant que C=C, poids moléculaire = 24) pour 1 000 g de mélange.

5. Enduits en poudre selon les revendications 1 à 4, caractérisés en ce qu'ils contiennent en plus des composants filmogènes A) et B), des amorceurs formant des radicaux libres et/ou des photoamorceurs, et éventuellement des pigments, ainsi que des auxiliaires et additifs usuels.

6. Procédé de production de tôles métalliques enduites, caractérisé en ce que l'on utilise, en vue de l'enduction, les enduits en poudre selon les revendications 1 à 5, lesquels sont durcis thermiquement ou en outre par un faisceau fortement énergétique.

7. Procédé selon la revendication 6, caractérisé en ce que les tôles métalliques sont façonnées après l'enduction par les enduits en poudre et le durcissement des enduits en poudre.
